# EUROPEAN PATENT SPECIFICATION

(11) **EP 4 501 590 B1**
(45) Date of publication and mention of the grant of the patent: **28.10.2026**
(21) Application number: 24184501.5
(22) Date of filing: 25.06.2024
(51) Int. Cl.: G01N 21/84, B29C 59/14, B29C 70/30, B29C 70/38, B29C 70/54

(54) **METHODS AND SYSTEMS FOR FABRICATION OF LAYUP FOR COMPOSITE PART**
VERFAHREN UND SYSTEME ZUR HERSTELLUNG EINER AUFLAGE FÜR EIN VERBUNDTEIL
PROCÉDÉS ET SYSTÈMES DE FABRICATION DE DRAPAGE POUR PIÈCE COMPOSITE

(30) Priority: 31.07.2023 US 202363516591 P; 18.08.2023 US 202318452179
(43) Date of publication of application: 05.02.2025
(73) Proprietor: The Boeing Company, Arlington, VA 22202 (US)
(72) Inventor: Ghose, Sayata, Arlington, 22202 (US); Belcher, Marcus A., Arlington, 22202 (US)
(74) Representative: Arnold & Siedsma

(56) References cited:
- US-A1- 2014 124 120
- US-A1- 2016 221 271
- US-A1- 2019 383 759
- US-A1- 2020 283 171
- US-A1- 2022 118 624
- US-A1- 2022 227 074
- US-A1- 2023 173 748

## Description

### FIELD

The present disclosure relates generally to fabrication of layups for composite parts and, particularly, to rework of individual tows within a current ply of the layup during the fabrication process. Various techniques for automated detection of material placement errors for the individual tows are contemplated. Various techniques for automated rework (e.g., removal and replacement) of unacceptable portions of the individual tows are also contemplated.

### BACKGROUND

Multi-lane automated fiber placement heads are commonly used during composite part fabrication. For example, if one lane of a 16-lane head that lays up 6.35-mm (0.25-inch) tows experiences a material placement error, it is not possible to go back and layup a single 6.35-mm (0.25-inch) tow of composite material using the multi-lane head.

US 2020/283171 A1, according to its abstract, states systems and methods for thermal inspection of tape layup. A method is provided for performing inspection of a tape layup. The method comprises laying up tape onto a surface of a laminate, applying heat to tack the tape to the surface, and generating thermographic images of the tape as applied to the surface.

US 2022/118624 A1, according to its abstract, states a tracking device that is mountable to a robot, the tracking device has a plurality of faces that contain marking indicia thereon that is used by an imaging apparatus to track the position of a robot. The robot is not required to be at a fixed location, and may have mobility features, such as drives that move the robot along a path of travel, surface, or in space. The tracking devices do not consume or require power to operate. A plurality of tracking devices may be installed on a robot and an imaging apparatus is used to image the field of view in which the robot operates. Discrete locations of the robot in real time or any point in time are ascertained through the positioning of the tracking device. Tracking devices may be installed on robots used for assembly or defect monitoring.

US 2016/221271 A1, according to its abstract, states various automated fiber placement systems and methods. The system can determine steerable paths for the application of a composite material over highly contoured surfaces. The system can determine when a course trajectory would violate a steering limitation (e.g., a maximum bendability of the composite material) and can adjust the trajectory to avoid such violations. The adjustment can create gaps between adjacent courses, which can have a generally flared peripheral shape. The system can fill such gaps with subsequent courses of the composite material. Thus, the system can automatically apply composite material to highly contoured surfaces while also avoiding violation of the steering limitations.

US 2022/227074 A1, according to its abstract, states a method for laying up a composite material includes steps of depositing the composite material onto a substrate, compacting the composite material with a compaction roller, the compaction roller and the substrate defining a nip, and projecting a plasma flume proximate the nip to heat at least one of the composite material and the substrate.

US 2019/383759 A1, according to its abstract, states an infrared camera that is directed aft of a compaction roller of a composite laying head. Heat is applied to a substrate by a heater mounted forward of the compaction roller. Infrared images are captured of composite tows laid down on a substrate by the compaction roller. Whether the composite tows have sufficient contact is determined using the infrared images.

US 2014/124120 A1, according to its abstract, states a system for detecting a missing tow in a tow band may include a fiber placement head for applying a tow band to a substrate forming a composite layup. The system may further include a heating device for preheating the substrate prior to application of the tow band. The system may additionally include an infrared camera mounted to the fiber placement head and configured to generate a real-time thermal image of the composite layup during the application of the tow band to the substrate.

US 2023/173748 A1, according to its abstract, states a manufacturing system that includes a plurality of rails, a plurality of head manipulating mechanisms respectively coupled to the rails, and a plurality of automated fiber placement (AFP) heads respectively coupled to the head manipulating mechanisms. The rails are arranged around a barrel-shaped layup tool, and each rail is parallel to a tool axis. Each head manipulating mechanism moves along a rail. The head manipulating mechanisms position the AFP heads in circumferential relation to each other about a tool surface of the layup tool. A total quantity of AFP heads comprises the maximum number of AFP heads that can be circumferentially arranged in longitudinal alignment with each other on the layup tool without interfering with each other while applying layup material over the tool when the layup tool is stationary and during rotation about the tool axis, to thereby fabricate a green state layup having a barrel shape.

Accordingly, those skilled in the art continue with research and development efforts to improve techniques for fabrication of layups for composite parts, particularly rework of tows with material placement errors during fabrication of such layups.

### SUMMARY

Disclosed are examples of methods and systems for fabrication of a layup for a composite part. The following is a non-exhaustive list of examples, which may or may not be claimed, of the subject matter according to the present disclosure.

In an example, according to a first aspect, the disclosed method for fabrication of a layup for a composite part includes: depositing at least one course of multiple tows for a current ply of the layup onto a substrate using a multi-lane automated fiber placement device; identifying an out-of-tolerance inconsistency in the current ply of the layup for the composite part;after the identifying the out-of-tolerance inconsistency, removing the multi-lane automated fiber placement device from the layup; providing a single-lane automated fiber placement device to the layup; depositing a replacement tow onto the substrate to rework the out-of-tolerance inconsistency in the current ply for the layup of the composite part using a single-lane automated fiber placement device; removing the single-lane automated fiber placement device from the layup; providing the multi-lane automated fiber placement device to the layup; and resuming the depositing of courses of multiple tows for the current ply and/or subsequent plies of the layup.

The identifying of the out-of-tolerance inconsistency may be performed using at least one imaging sensor. Preferably, the identifying of the out-of-tolerance inconsistency is performed in conjunction with laying up the plurality of tows associated with the current ply. Further preferably, the at least one imaging sensor comprises a single-lane scanner configured to scan a single tow of the plurality of tows. Further preferably, the at least one imaging sensor comprises a multi-lane scanner configured to scan multiple tows of the plurality of tows. Further preferably, the at least one imaging sensor captures imaging data for a single tow of the plurality of tows. Further preferably, the at least one imaging sensor captures imaging data for multiple tows of the plurality of tows.

The layup may comprise one or more plies, the one or more plies may comprise the current ply, each ply may comprise one or more courses, each course may comprise multiple tows, the multiple tows of each course may be concurrently overlaid on the substrate.

The composite part may comprise at least one of a fiber reinforcement material, a matrix material, a carbon fiber material, a prepreg material, a thermoplastic material and a thermoset material.

The substrate may comprise at least one of a layup tool and one or more preceding plies overlaid on the layup tool.

The plurality of tows may comprise at least one of a fiber reinforcement tape, a fiber/polymer tape, a prepreg tape, a strip of a fiber reinforcement material, a strip of a fiber/polymer material and a strip of a prepreg material.

The replacement tow may comprise at least one of a fiber reinforcement tape, a fiber/polymer tape, a prepreg tape, a strip of a fiber reinforcement material, a strip of a fiber/polymer material and a strip of a prepreg material.

The method may include determining the out-of-tolerance inconsistency requires the rework. Preferably, the determining the out-of-tolerance inconsistency requires the rework and the depositing of the replacement tow is performed prior to laying up a next ply. Further preferably, the determining comprises: comparing the out-of-tolerance inconsistency to tow standards for the layup of the composite part in relation to acceptable tolerances for the tow standards; and determining the replacement tow is required to rework the out-of-tolerance inconsistency where the out-of-tolerance inconsistency is not within the acceptable tolerances of the tow standards.

The plurality of tows in the current ply may have been deposited onto the substrate using a multi-lane automated fiber placement device in one or more passes of the multi-lane automated fiber placement device along the substrate.

The depositing of the replacement tow may be performed using a single-lane automated fiber placement device.

The method may include removing at least one portion of one or more tows of the plurality of tows in the current ply to prepare for the rework of the out-of-tolerance inconsistency, the at least one portion of the one or more tows being proximate to the out-of-tolerance inconsistency. Preferably, the replacement tow is deposited onto the substrate to replace the at least one portion of the one or more tows removed from the current ply. Further preferably, the removing of the at least one portion of the one or more tows is performed using a tow removal tool. Further preferably, the depositing of the replacement tow comprises: overlapping the replacement tow onto one or more retained portions of the one or more tows from which the at least one portion was removed. Further preferably, the depositing of the replacement tow comprises: splicing the replacement tow with one or more retained portions of the one or more tows from which the at least one portion was removed.

The depositing of the replacement tow may comprise compacting the replacement tow on the substrate to define a nip. Preferably, the compacting of the replacement tow is performed using a compaction roller, the compaction roller and the substrate defining the nip.

Further preferably, the depositing of the replacement tow further comprises: projecting an atmospheric pressure plasma flume proximate the nip to heat at least one of the replacement tow and the substrate. Preferably, the projecting of the atmospheric pressure plasma flume comprises projecting the atmospheric pressure plasma flume at an emanation angle ranging from at least one of about 0 degrees to about 20 degrees, about 0 degrees to about 10 degrees and about 0 degrees to about 5 degrees. Further preferably, the projecting of the atmospheric pressure plasma flume comprises projecting the atmospheric pressure plasma flume at a pressure ranging from about 103.42 kPa (15 psi) to about 344.74 kPa (50 psi). Further preferably, the atmospheric pressure plasma flume has a width ranging from at least one of about 2.54 mm (0.10 inches) to about 10.16 mm (0.40 inches), about 3.81 mm (0.15 inches) to about 8.89 mm (0.35 inches) and about 5.08 mm (0.20 inches) to about 7.62 mm (0.30 inches). Further preferably, the atmospheric pressure plasma flume has a length ranging from at least one of about 6.35 mm (0.25 inches) to about 38.1 mm (1.5 inches), about 12.7 mm (0.5 inches) to about 25.4 mm (1.0 inches) and about 17.78 mm (0.70 inches) to about 20.32 mm (0.80 inches). Further preferably, the atmospheric pressure plasma flume is about 12.7 mm (0.5 inches) to about 20.32 mm (0.8 inches) from the nip. Further preferably, the depositing of the replacement tow further comprises: cutting the replacement tow to a desired length in conjunction with the projecting of the atmospheric pressure plasma flume and the rework of the out-of-tolerance inconsistency.

The out-of-tolerance inconsistency in the layup of the composite part may be due to a segment missing from one or more tows, wherein the depositing of the replacement tow may comprise: compacting the replacement tow on the substrate to define a nip; projecting an atmospheric pressure plasma flume proximate the nip to heat at least one of the replacement tow and the substrate; and cutting the replacement tow to a desired length in conjunction with the projecting of the atmospheric pressure plasma flume.

In another example, according to a second aspect, the disclosed method for fabricating a layup for a composite part includes: (1) depositing a first plurality of tows onto a substrate using a multi-lane automated fiber placement device to form a first ply overlaying the substrate in conjunction with fabrication of the layup for the composite part; (2) after one or more out-of-tolerance inconsistencies in the first ply are identified and designated for rework, depositing one or more replacement tows onto the substrate to rework the one or more out-of-tolerance inconsistencies in the first ply using a single-lane automated fiber placement device; and (3) depositing a second plurality of tows onto the substrate using the multi-lane automated fiber placement device to form a second ply overlaying the first ply in conjunction with fabrication of the layup for the composite part. Preferably, the method of the second aspect comprises the method of the first aspect, wherein the current ply of the first aspect is the first ply of the second aspect.

The method may include after the one or more out-of-tolerance inconsistencies are identified and designated for the rework, removing the multi-lane automated fiber placement device from the layup; and providing the single-lane automated fiber placement device to the layup.

The method may include after the one or more replacement tows are deposited, removing the single-lane automated fiber placement device from the layup; and providing the multi-lane automated fiber placement device to the layup to resume the depositing of multiple tows for the layup.

The plurality of tows may comprise at least one of a fiber reinforcement tape, a fiber/polymer tape, a prepreg tape, a strip of a fiber reinforcement material, a strip of a fiber/polymer material and a strip of a prepreg material.

The substrate may comprise at least one of a layup tool and one or more preceding plies overlaid on the layup tool.

The layup may comprise a plurality of plies, the plurality of plies may comprise the first ply and the second ply, the first ply may comprise one or more courses, each course may comprise multiple tows, the multiple tows of each course may be concurrently overlaid on the substrate by the multi-lane automated fiber placement device.

The composite part may comprise at least one of a fiber reinforcement material, a matrix material, a carbon fiber material, a prepreg material, a thermoplastic material and a thermoset material.

The one or more replacement tows may comprise at least one of a fiber reinforcement tape, a fiber/polymer tape, a prepreg tape, a strip of a fiber reinforcement material, a strip of a fiber/polymer material and a strip of a prepreg material.

The method may include: determining the one or more out-of-tolerance inconsistencies require the rework. Preferably, the determining the one or more out-of-tolerance inconsistencies require the rework and the depositing of the one or more replacement tows are performed prior to the depositing of the second plurality of tows to form the second ply. Further preferably, the determining comprises: comparing the one or more out-of-tolerance inconsistencies to tow standards for the layup of the composite part in relation to acceptable tolerances for the tow standards; and determining the one or more replacement tows are required to rework the one or more out-of-tolerance inconsistencies where the one or more out-of-tolerance inconsistencies are not within the acceptable tolerances of the tow standards.

The method may include removing at least one portion of one or more tows of the first plurality of tows in the first ply to prepare for the rework of the one or more out-of-tolerance inconsistencies, the at least one portion of the one or more tows being proximate to the one or more out-of-tolerance inconsistencies. Preferably, the one or more replacement tows are deposited onto the substrate to replace the at least one portion of the one or more tows removed from the first ply. Further preferably, the removing of the at least one portion of the one or more tows is performed using a tow removal tool. Further preferably, the depositing of the one or more replacement tows comprises: overlapping the one or more replacement tows onto one or more retained portions of the one or more tows from which the at least one portion was removed. Further preferably, the depositing of the one or more replacement tows comprises: splicing the one or more replacement tows with one or more retained portions of the one or more tows from which the at least one portion was removed.

The depositing of the one or more replacement tows may comprise: compacting the one or more replacement tows on the substrate to define a nip. Preferably, the single-lane automated fiber placement device comprises a compaction roller, wherein the compacting of the one or more replacement tows are performed using the compaction roller, the compaction roller and the substrate defining the nip. Further preferably, the depositing of the one or more replacement tows further comprises: projecting an atmospheric pressure plasma flume proximate the nip to heat at least one of the one or more replacement tows and the substrate. Optionally, the depositing of the one or more replacement tows further comprises: cutting the one or more replacement tows to a desired length in conjunction with the projecting of the atmospheric pressure plasma flume and the rework of the one or more out-of-tolerance inconsistencies.

The one or more out-of-tolerance inconsistencies in the first ply of the layup for the composite part may be due to a segment missing from one or more tows, wherein the depositing of the one or more replacement tows comprises: compacting the one or more replacement tows on the substrate to define a nip; projecting an atmospheric pressure plasma flume proximate the nip to heat at least one of the one or more replacement tows and the substrate; and cutting the one or more replacement tows to a desired length in conjunction with the projecting of the atmospheric pressure plasma flume.

In an example, according to a third aspect, the disclosed system for fabricating a layup for a composite part includes a multi-lane automated fiber placement device and a single-lane automated fiber placement device. The multi-lane automated fiber placement device is configured to deposit a first plurality of tows onto a substrate to form a first ply overlaying the substrate in conjunction with fabrication of the layup for the composite part. The single-lane automated fiber placement device is configured to deposit one or more replacement tows onto the substrate to rework one or more out-of-tolerance inconsistencies in the first ply. The one or more out-of-tolerance inconsistencies were previously identified and designated for rework. The multi-lane automated fiber placement device is configured to deposit a second plurality of tows onto the substrate to form a second ply overlaying the first ply in conjunction with fabrication of the layup for the composite part, after the rework of the one or more out-of-tolerance inconsistencies. Preferably, the system is configured to perform the method according to the first aspect and/or the second aspect.

The plurality of tows may comprise at least one of a fiber reinforcement tape, a fiber/polymer tape, a prepreg tape, a strip of a fiber reinforcement material, a strip of a fiber/polymer material and a strip of a prepreg material.

The substrate may comprise at least one of a layup tool and one or more preceding plies overlaid on the layup tool.

The layup may comprise a plurality of plies, the plurality of plies may comprise the first ply and the second ply, the first ply may comprise one or more courses, each course may comprise multiple tows, the multiple tows of each course may be concurrently overlaid on the substrate by the multi-lane automated fiber placement device.

The composite part may comprise at least one of a fiber reinforcement material, a matrix material, a carbon fiber material, a prepreg material, a thermoplastic material and a thermoset material.

The one or more replacement tows may comprise at least one of a fiber reinforcement tape, a fiber/polymer tape, a prepreg tape, a strip of a fiber reinforcement material, a strip of a fiber/polymer material and a strip of a prepreg material.

The multi-lane automated fiber placement device may comprise: a plurality of tow layup machines configured to concurrently deposit tows onto the substrate to form a course of tows for the first ply, wherein each tow layup machine may comprise: a layup tow material dispenser; a layup feed mechanism; a layup cutting mechanism; a layup compaction roller; a layup heat source; and an imaging sensor configured to capture image data associated with the corresponding tow; and a computing device configured to analyze the image data for the first ply. Preferably, the plurality of tow layup machines comprises at least one of two tow layup machines, four tow layup machines, eight tow layup machines and sixteen tow layup machines. Further preferably, the computing device is configured to identify the one or more out-of-tolerance inconsistencies in the first ply based on the image data for the first ply. Optionally, the computing device is configured to compare the image data for the one or more out-of-tolerance inconsistencies in the first ply to tow standards for the layup of the composite part in relation to acceptable tolerances for the tow standards, wherein the computing device is configured to determine the one or more replacement tows are required to rework the one or more out-of-tolerance inconsistencies in the first ply where the one or more out-of-tolerance inconsistencies are not within the acceptable tolerances of the tow standards.

The system may include a tow removal tool configured to remove at least one portion of one or more tows of the first plurality of tows in the first ply to prepare for the rework of the one or more out-of-tolerance inconsistencies, the at least one portion of the one or more tows being proximate to the one or more out-of-tolerance inconsistencies. Preferably, the single-lane automated fiber placement device is configured to deposit the one or more replacement tows onto the substrate to replace the at least one portion of the one or more tows removed from the first ply. Further preferably, the tow removal tool comprises a seam ripper tool. Further preferably, the single-lane automated fiber placement device is configured to deposit the one or more replacement tows onto the substrate to overlap the one or more replacement tows onto one or more retained portions of the one or more tows from which the at least one portion was removed. Further preferably, the single-lane automated fiber placement device is configured to deposit the one or more replacement tows onto the substrate to splice the one or more replacement tows with one or more retained portions of the one or more tows from which the at least one portion was removed.

The single-lane automated fiber placement device may include: a compaction roller configured to compact the one or more replacement tows on the substrate to define a nip, the compaction roller and the substrate defining the nip. Preferably, the single-lane automated fiber placement device further comprises: an atmospheric pressure plasma heat source configured to project an atmospheric pressure plasma flume proximate the nip to heat at least one of the one or more replacement tows and the substrate. Further preferably, the single-lane automated fiber placement device further comprises: a cutting mechanism configured to cut the one or more replacement tows to a desired length in conjunction with operation of the atmospheric pressure plasma heat source and the rework of the one or more out-of-tolerance inconsistencies. Further preferably, the single-lane automated fiber placement device further comprises: a tow material dispenser configured to hold and dispense bulk tow material; and a feed mechanism configured to advance the bulk tow material from the tow material dispenser to the compaction roller via the cutting mechanism.

The one or more out-of-tolerance inconsistencies in the first ply of the layup for the composite part may be due to a segment missing from one or more tows, wherein the single-lane automated fiber placement device may comprise: a compaction roller configured to compact the one or more replacement tows on the substrate to define a nip; an atmospheric pressure plasma heat source configured to project an atmospheric pressure plasma flume proximate the nip to heat at least one of the one or more replacement tows and the substrate; and a cutting mechanism configured to cut the one or more replacement tows to a desired length in conjunction with projection of the atmospheric pressure plasma flume.

The single-lane automated fiber placement device may include: a tow material dispenser; a feed mechanism; a cutting mechanism; a compaction roller; and an atmospheric pressure plasma heat source.

Other examples of the disclosed methods and systems to fabricate a composite part will become apparent from the following detailed description, the accompanying drawings and the appended claims.

### BRIEF DESCRIPTION OF THE DRAWINGS

Fig. 1 is a flow diagram of an example of a method for fabrication of a layup for a composite part;
Fig. 2 is a functional diagram of an example of multiple tows of a ply for the layup showing several examples of out-of-tolerance inconsistencies;
Fig. 3 is functional diagram of examples of replacement tows for rework of the out-of-tolerance inconsistencies in the multiple tows of Fig. 2;
Fig. 4 is a flow diagram showing an example of "determining the out-of-tolerance inconsistency" from the method of Fig. 1;
Fig. 5 is a flow diagram showing an example of "depositing a replacement tow" from the method of Fig. 1;
Fig. 6 is a flow diagram showing another example of "depositing a replacement tow" from the method of Fig. 1;
Fig. 7 is a flow diagram showing yet another example of "depositing a replacement tow" from the method of Fig. 1;
Fig. 8 is a flow diagram of another example of a method for fabrication of a layup for a composite part;
Fig. 9 is a flow diagram showing an example of "determining the one or more out-of-tolerance inconsistencies" from the method of Fig. 8;
Fig. 10 is a flow diagram showing an example of "depositing one or more replacement tows" from the method of Fig. 8;
Fig. 11 is a flow diagram showing another example of "depositing one or more replacement tows" from the method of Fig. 8;
Fig. 12 is a flow diagram showing yet another example of "depositing one or more replacement tows" from the method of Fig. 8;
Fig. 13A is a functional diagram of an example of a multi-lane automated fiber placement device for layup of tows in four tow lanes;
Fig. 13B is a functional diagram of an example of a tow removal tool for removal of a portion of a tow proximate to an out-of-tolerance inconsistency;
Fig. 13C is a functional diagram of an example of a single-lane automated fiber placement device for layup of a replacement tow proximate to the out-of-tolerance inconsistency of Fig. 13B;
Figs. 14A and 14B are functional diagrams showing another example of a multi-lane automated fiber placement device for fabrication of a layup for a composite part;
Figs. 15 and 16 are functional diagrams showing an example of a single-lane automated fiber placement device for rework of out-of-tolerance inconsistencies in a current ply during fabrication of a layup for a composite part;
Fig. 17, in combination with Fig. 1, is a flow diagram of yet another example of a method for fabrication of a layup for a composite part;
Fig. 18, in combination with Fig. 8, is a flow diagram of still another example of a method for fabrication of a layup for a composite part;
Fig. 19, in combination with Fig. 8, is a flow diagram of still yet another example of a method for fabrication of a layup for a composite part;
Fig. 20 is a block diagram of aircraft production and service methodology the implements one or more of the examples of methods for fabrication of a layup for a composite part disclosed herein; and
Fig. 21 is a schematic illustration of an aircraft that incorporates one or more part produced using one or more of the examples of methods and systems for fabrication of a layup for a composite part disclosed herein.

### DETAILED DESCRIPTION

The various examples of methods 100, 800, 1700, 1800, 1900 and systems for fabrication of a layup 200 for a composite part disclosed herein provide techniques for applying localized heating for automated fiber placement of a single lane as a rework method during composite part fabrication by a multi-lane automated fiber placement system. For example, the method may include detecting a misplaced tow and removing the multi-lane automated fiber placement device. Then, the misplaced tow can be removed, and a single-lane automated fiber placement device can be brought into the fabrication process. Next, a single lane of tow material may be placed to replace the removed material using a plasma heater to create a plasma flume (e.g., 6.35-mm (0.25-inch) tow width by 19.05-mm (0.75-inch) tow length) on the single tow during the placement. Then, the single-lane tow placement device can be replaced with the multi-lane tow placement device and laying down multiple lanes of tow material can be resumed. The heater provides enough heat to melt and consolidate. The heat source is atmospheric pressure plasma equipment with a focused plasma flume. The intended target includes thermoplastic automated fiber placement, but it is conceivable that the process can be used for thermoset automated fiber placement. Existing automated fiber placement rework solutions require manual layup of single tows. Atmospheric pressure plasma equipment can provide even heat application at low cost. Moreover, the atmospheric pressure plasma equipment provides relatively instantaneous heating without requiring additional safety enclosures or being bound by line-of-sight limitations with other localized heating methods, such as laser and infrared heating.

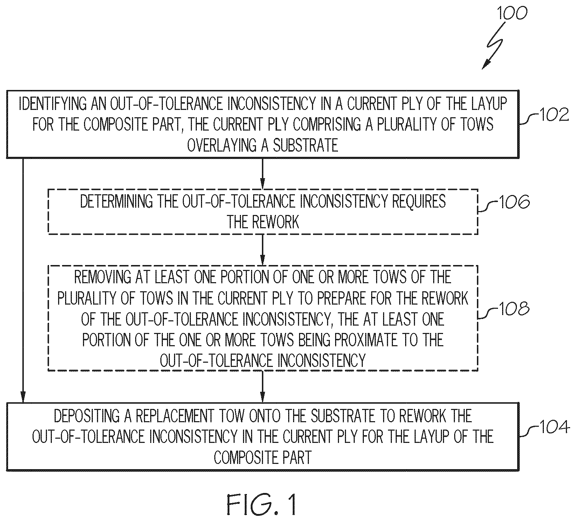

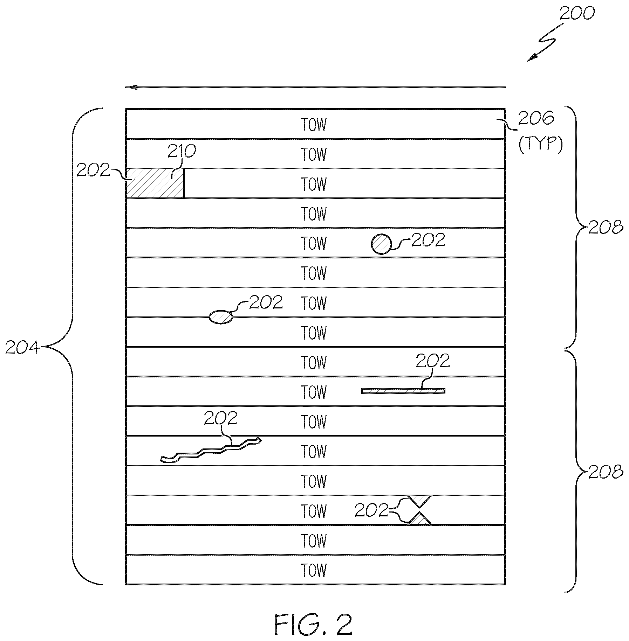

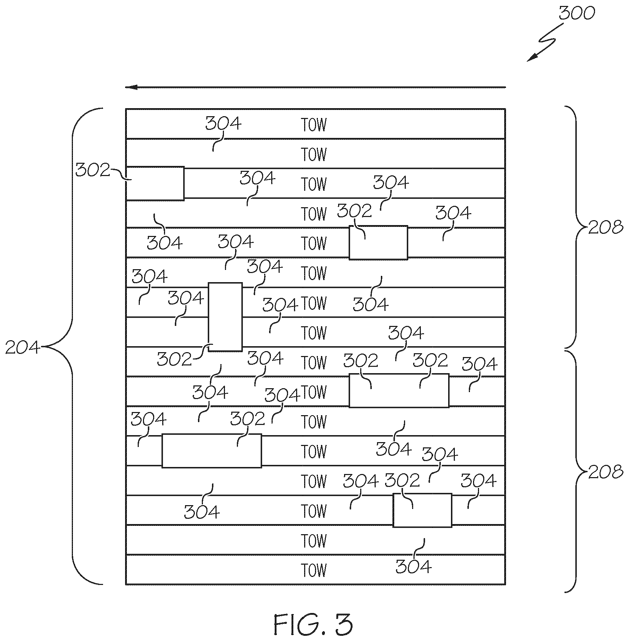

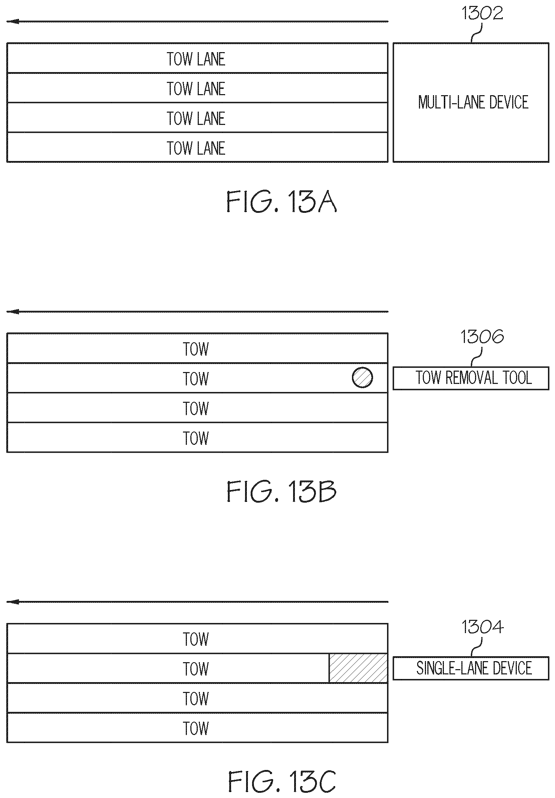

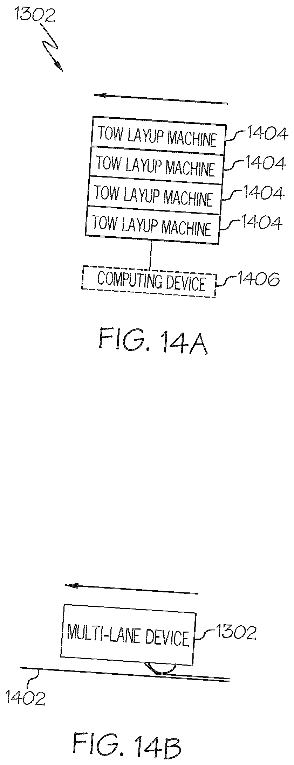

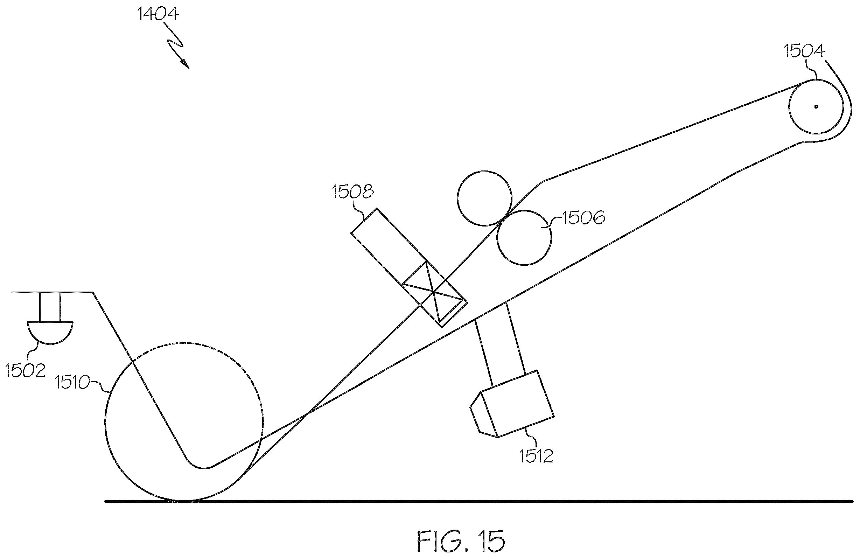

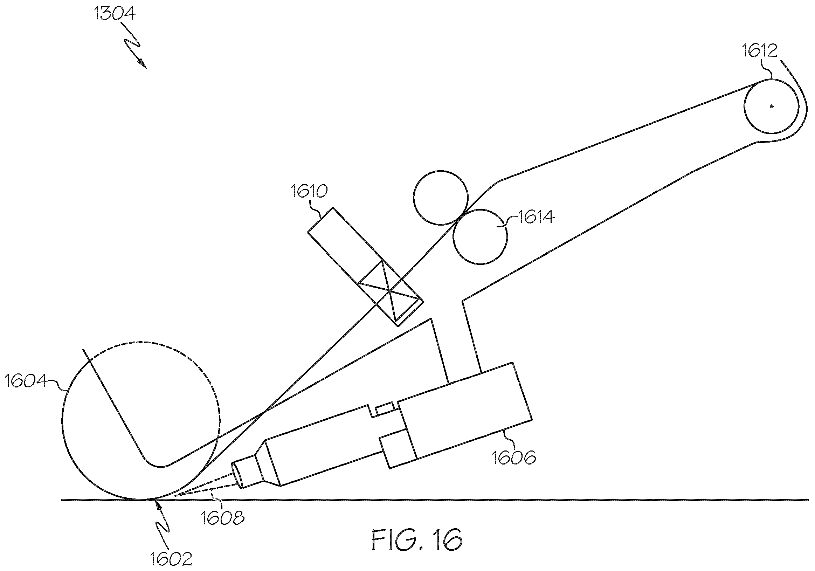

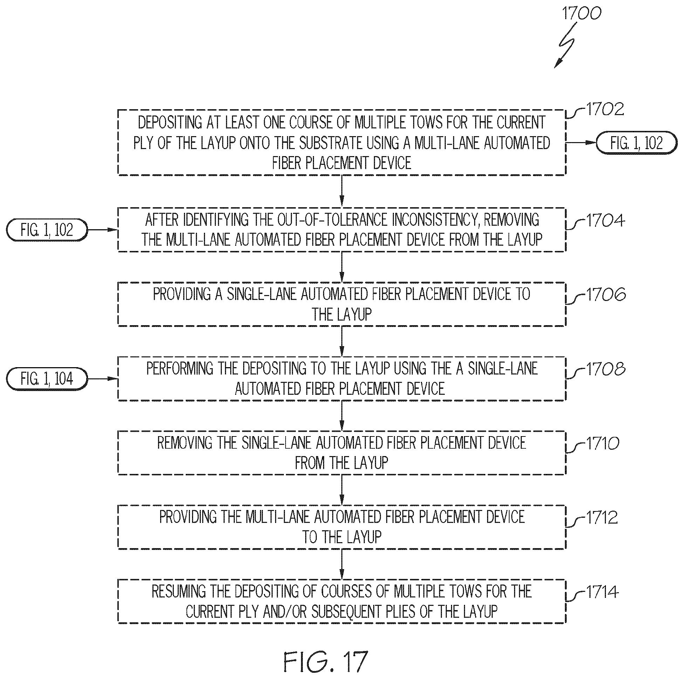

Referring generally to Figs. 1-7, 13A-C, 14A, 14B and 15-17, by way of examples, the present disclosure is directed to methods 100, 1700 for fabrication of a layup 200 for a composite part. Figs. 1 and 4-7 disclose several examples of the method 100. Figs. 1 and 17 disclose several examples of the method 1700. Fig. 2 shows an example of multiple tows 206 of a ply 204 for the layup 200 and several examples of out-of-tolerance inconsistencies 202. Fig. 3 shows examples of replacement tows 302 for rework of the out-of-tolerance inconsistencies 202. Fig. 13A, 14A and 14B show several examples of multi-lane automated fiber placement devices 1302. Fig. 13B is a functional diagram of an example of a tow removal tool 1306. Fig. 13C is a functional diagram of an example of a single-lane automated fiber placement device 1304.

With reference again to Figs. 1, 2, 14A and 14B, in one or more examples, a method 100 (see Fig. 1) for fabrication of a layup 200 for a composite part includes identifying 102 an out-of-tolerance inconsistency 202 in a current ply 204 of the layup 200 for the composite part. The current ply 204 includes a plurality of tows 206 overlaying a substrate 1402. At 104, a replacement tow 302 is deposited onto the substrate 1402 to rework the out-of-tolerance inconsistency 202 in the current ply 204 for the layup 200 of the composite part.

With reference again to Figs. 1, 2, 13A-C, 14A, 14B and 17, in one or more examples, a method 1700 (see Fig. 17) for fabrication of a layup 200 for a composite part includes the method 100 of Fig. 1 and interacts with 102 and 104 of Fig. 1. At 1702, at least one course 208 of multiple tows 206 for the current ply 204 of the layup 200 is deposited onto the substrate 1402 using a multi-lane automated fiber placement device 1302. In certain examples, the method 1700 may continue from 1702 to 102 of Fig. 1. The method 1700 may continue from 102 of Fig. 1 to 1704 where, after the identifying 102 of the out-of-tolerance inconsistency 202, the multi-lane automated fiber placement device 1302 is removed from the layup 200. At 1706, a single-lane automated fiber placement device 1304 is provided to the layup 200. The method 1700 may continue from 104 of Fig. 1 to 1708 where the depositing 104 to the layup 200 is performed using the a single-lane automated fiber placement device 1304. At 1710, the single-lane automated fiber placement device 1304 is removed from the layup 200. At 1712, the multi-lane automated fiber placement device 1302 is provided to the layup 200. At 1714, the depositing of courses 208 of multiple tows 206 for the current ply 204 and/or subsequent plies 204 of the layup 200 is resumed.

With reference again to Figs. 1-7, 13A-C, 14A, 14B, 15 and 16, in another example of the method 100, the identifying 102 of the out-of-tolerance inconsistency 202 is performed using at least one imaging sensor 1502. In a further example, the identifying 102 of the out-of-tolerance inconsistency 202 is performed in conjunction with laying up the plurality of tows 206 associated with the current ply 204. In another further example, the at least one imaging sensor 1502 includes a single-lane scanner configured to scan a single tow 206 of the plurality of tows 206. In yet another further example, the at least one imaging sensor 1502 includes a multi-lane scanner configured to scan multiple tows 206 of the plurality of tows 206. In still another further example, the at least one imaging sensor 1502 captures imaging data for a single tow 206 of the plurality of tows 206. In still yet another further example, the at least one imaging sensor 1502 captures imaging data for multiple tows 206 of the plurality of tows 206. There are multiple methods for scanning defects during layup. For example, scanning techniques can range from a single camera to five or more sensors scanning 16 rows. The number of scanners/sensors needed depends on the resolution of the sensing device as well as the width of the course.

In yet another example of the method 100, the layup 200 includes one or more plies 204. The one or more plies 204 include the current ply 204. Each ply 204 includes one or more courses 208. Each course 208 includes multiple tows 206. The multiple tows of each course 208 concurrently overlaid on the substrate 1402.

In still another example of the method 100, the composite part includes a fiber reinforcement material, a matrix material, a carbon fiber material, a prepreg material, a thermoplastic material, a thermoset material or any other suitable material for a composite part in any suitable combination.

In still yet another example of the method 100, the substrate 1402 includes at least one of a layup tool and one or more preceding plies 204 overlaid on the layup tool.

In another example of the method 100, the plurality of tows 206 includes a fiber reinforcement tape, a fiber/polymer tape, a prepreg tape, a strip of a fiber reinforcement material, a strip of a fiber/polymer material, a strip of a prepreg material or any other suitable material in any suitable combination.

In yet another example of the method 100, the replacement tow 302 includes a fiber reinforcement tape, a fiber/polymer tape, a prepreg tape, a strip of a fiber reinforcement material, a strip of a fiber/polymer material, a strip of a prepreg material or any other suitable material in any suitable combination.

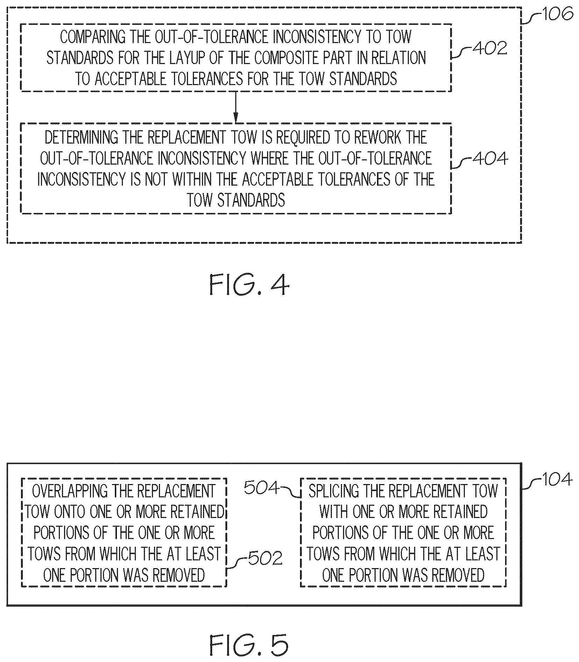

In still another example, the method 100 also includes determining 106 the out-of-tolerance inconsistency 202 requires rework. In a further example, determining 106 the out-of-tolerance inconsistency 202 requires rework and depositing 104 of the replacement tow 302 are performed prior to laying up a next ply 204. In another further example of the method 100, the determining 106 includes comparing 402 (see Fig. 4) the out-of-tolerance inconsistency 202 to tow standards for the layup 200 of the composite part in relation to acceptable tolerances for the tow standards. At 404, it is determined that the replacement tow 302 is required to rework the out-of-tolerance inconsistency 202 where the out-of-tolerance inconsistency 202 is not within the acceptable tolerances of the tow standards.

In still yet another example of the method 100, the plurality of tows 206 in the current ply 204 were deposited onto the substrate 1402 using a multi-lane automated fiber placement device 1302 in one or more passes of the multi-lane automated fiber placement device 1302 along the substrate 1402.

In another example of the method 100, the depositing 104 of the replacement tow 302 is performed using a single-lane automated fiber placement device 1304.

In yet another example, the method 100 also includes removing 108 at least one portion of one or more tows 206 of the plurality of tows 206 in the current ply 204 to prepare for rework of the out-of-tolerance inconsistency 202. The at least one portion of the one or more tows 206 being proximate to the out-of-tolerance inconsistency 202. In a further example, the replacement tow 302 is deposited onto the substrate 1402 to replace the at least one portion of the one or more tows 206 removed from the current ply 204. In another further example, the removing 108 of the at least one portion of the one or more tows 206 is performed using a tow removal tool 1306. In yet another further example of the method 100, the depositing 104 of the replacement tow 302 includes overlapping 502 (see Fig. 5) the replacement tow 302 onto one or more retained portions 304 of the one or more tows 206 from which the at least one portion was removed. In yet another further example of the method 100, the depositing 104 of the replacement tow 302 includes splicing 504 the replacement tow 302 with one or more retained portions 304 of the one or more tows 206 from which the at least one portion was removed.

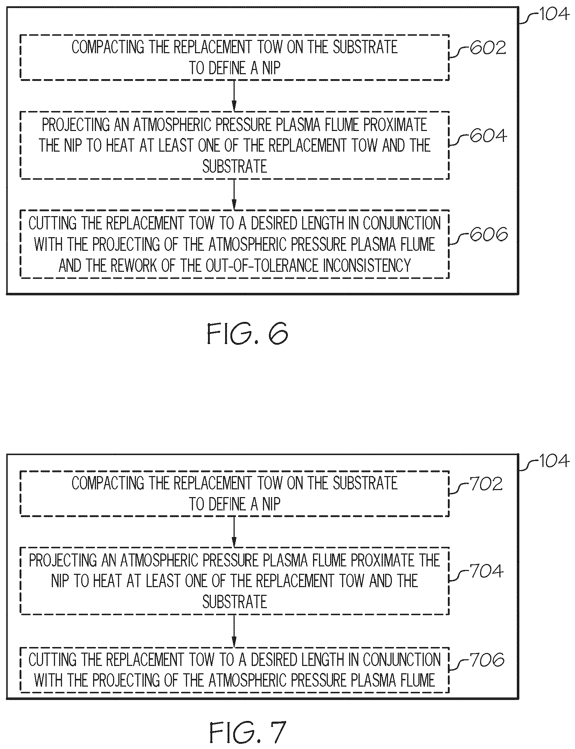

In still another example of the method 100, the depositing 104 of the replacement tow 302 includes compacting 602 (see Fig. 6) the replacement tow 302 on the substrate 1402 to define a nip 1602. In a further example, the compacting 602 of the replacement tow 302 is performed using a compaction roller 1604. The compaction roller 1604 and the substrate 1402 define the nip 1602.

In another further example of the method 100, the depositing 104 of the replacement tow 302 also includes projecting 604 an atmospheric pressure plasma flume 1608 proximate the nip 1602 to heat at least one of the replacement tow 302 and the substrate 1402. In an even further example, the projecting 604 of the atmospheric pressure plasma flume 1608 includes projecting the atmospheric pressure plasma flume 1608 at an emanation angle ranging from about 0 degrees to about 20 degrees, about 0 degrees to about 10 degrees, about 0 degrees to about 5 degrees or any other suitable emanation angle range. In another even further example, the projecting 604 of the atmospheric pressure plasma flume 1608 includes projecting the atmospheric pressure plasma flume 1608 at a pressure ranging from about 103.42 kPa (15 psi) to about 344.74 kPa (50 psi). In yet another even further example, the atmospheric pressure plasma flume 1608 has a width ranging from about 2.54 mm (0.10 inches) to about 10.16 mm (0.40 inches), about 3.81 mm (0.15 inches) to about 8.89 mm (0.35 inches), about 5.08 mm (0.20 inches) to about 7.62 mm (0.30 inches) or any other suitable flume width range. In still another further example, the atmospheric pressure plasma flume 1608 has a length ranging from about 6.35 mm (0.25 inches) to about 38.1 mm (1.5 inches), about 12.7 mm (0.5 inches) to about 25.4 mm (1.0 inches), about 17.78 mm (0.70 inches) to about 20.32 mm (0.80 inches) or any other suitable flume length range. In still yet another further example, the atmospheric pressure plasma flume 1608 is about 12.7 mm (0.5 inches) to about 20.32 mm (0.8 inches) from the nip 1602. In another further example of the method 100, the depositing 104 of the replacement tow 302 also includes cutting 606 the replacement tow 302 to a desired length in conjunction with the projecting 604 of the atmospheric pressure plasma flume 1608 and the rework of the out-of-tolerance inconsistency 202.

Using a single tow device with a heating source avoids damaging the rest of the substrate during the rework process. If a 12-tow system is used that is heating all 12 lanes but only laying up one lane of material, the remaining 11 lanes are subject to a bare roller and heat which can damage the substrate, expose the material to excessive heat, cause a roller wrap or even pull up the whole charge. The rework of a single tow should be accomplished without damaging the remaining tows.

In still yet another example of the method 100, the out-of-tolerance inconsistency 202 in the layup 200 of the composite part is due to a segment 210 missing from one or more tows 206. In this example, the depositing 104 of the replacement tow 302 includes compacting 702 (see Fig. 7) the replacement tow 302 on the substrate 1402 to define a nip 1602. Using a single tow device for compaction allows the level of compaction to be the same as the compaction during the original layup. At 704, an atmospheric pressure plasma flume 1608 is projected proximate the nip 1602 to heat at least one of the replacement tow 302 and the substrate 1402. At 706, the replacement tow 302 is cut to a desired length in conjunction with the projecting 704 of the atmospheric pressure plasma flume 1608.

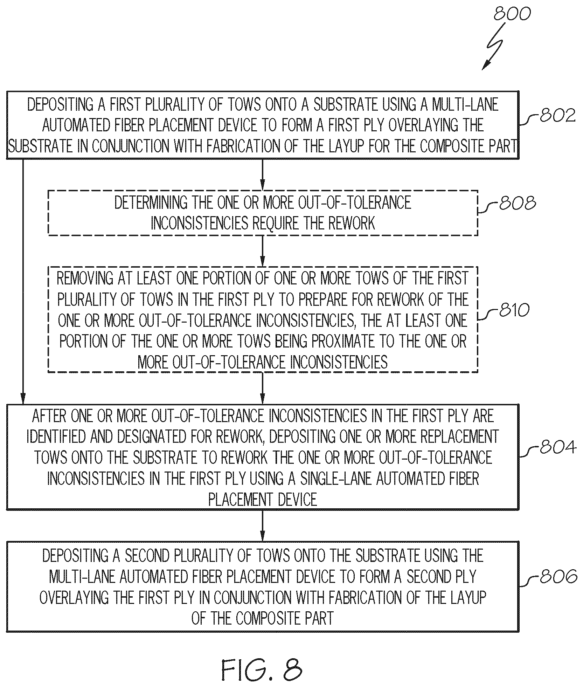

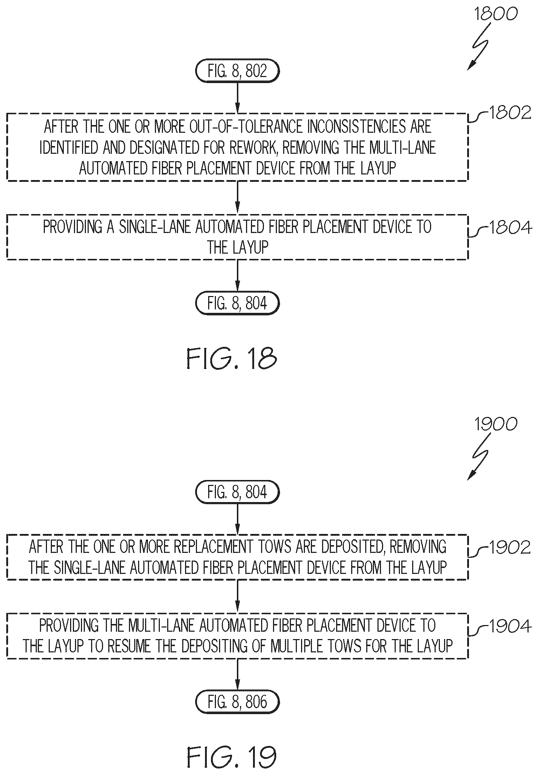

Referring generally to Figs. 2, 3, 8-12, 13A-C, 14A, 14B, 15, 16, 18 and 19, by way of examples, the present disclosure is directed to methods 100, 1800, 1900 for fabrication of a layup 200 for a composite part. Fig. 2 shows an example of multiple tows 206 of a ply 204 for the layup 200 and several examples of out-of-tolerance inconsistencies 202. Fig. 3 shows examples of replacement tows 302 for rework of the out-of-tolerance inconsistencies 202. Figs. 8-12 disclose several examples of the method 800. Figs. 8 and 18 disclose several examples of the method 1800. Figs. 8 and 18 disclose several examples of the method 1800. Fig. 13A, 14A and 14B show several examples of multi-lane automated fiber placement devices 1302. Fig. 13B is a functional diagram of an example of a tow removal tool 1306. Fig. 13C is a functional diagram of an example of a single-lane automated fiber placement device 1304.

With reference again to Figs. 2, 3, 8, 13A-C, 14A and 14B, in one or more examples, a method 800 (see Fig. 8) for fabrication of a layup 200 for a composite part includes depositing 802 a first plurality of tows 206 onto a substrate 1402 using a multi-lane automated fiber placement device 1302 to form a first ply 204 overlaying the substrate 1402 in conjunction with fabrication of the layup 200 for the composite part. At 804, after one or more out-of-tolerance inconsistencies 202 in the first ply 204 are identified and designated for rework, one or more replacement tows 302 are deposited onto the substrate 1402 to rework the one or more out-of-tolerance inconsistencies 202 in the first ply 204 using a single-lane automated fiber placement device 1304. At 806, a second plurality of tows is deposited onto the substrate 1402 using the multi-lane automated fiber placement device 1302 to form a second ply 204 overlaying the first ply 204 in conjunction with fabrication of the layup 200 for the composite part.

With reference again to Figs. 2, 3, 8, 13A-C, 14A, 14B and 18, in one or more examples, a method 1800 (see Fig. 18) for fabrication of a layup 200 for a composite part includes the method 800 of Fig. 8 and continues from 802 to 1802 where, after the one or more out-of-tolerance inconsistencies 202 are identified and designated for rework, the multi-lane automated fiber placement device 1302 is removed from the layup 200. At 1804, the single-lane automated fiber placement device 1304 is provided to the layup 200. The method 1800 continues from 1804 to 804 of Fig. 8.

With reference again to Figs. 2, 3, 8, 13A-C, 14A, 14B and 19, in one or more examples, a method 1900 (see Fig. 19) for fabrication of a layup 200 for a composite part includes the method 800 of Fig. 8 and continues from 804 to 1902 where, after the one or more replacement tows 302 are deposited, the single-lane automated fiber placement device 1304 is removed from the layup 200. At 1904, the multi-lane automated fiber placement device 1302 is provided to the layup 200 to resume the depositing of multiple tows 206 for the layup 200. The method 1900 continues from 1904 to 806 of Fig. 8.

With reference again to Figs. 2, 3, 8-12, 13A-C, 14A, 14B, 15 and 16, in another example of the method 800, the plurality of tows 206 include a fiber reinforcement tape, a fiber/polymer tape, a prepreg tape, a strip of a fiber reinforcement material, a strip of a fiber/polymer material, a strip of a prepreg material, or any other suitable material in any suitable combination.

In yet another example of the method 800, substrate 1402 includes at least one of a layup tool and one or more preceding plies 204 overlaid on the layup tool.

In still another example of the method 800, the layup 200 includes a plurality of plies 204. The plurality of plies 204 includes the first ply 204 and the second ply 204. The first ply 204 includes one or more courses 208. Each course 208 includes multiple tows 206. The multiple tows 206 of each course 208 concurrently overlaid on the substrate 1402 by the multi-lane automated fiber placement device 1302.

In still yet another example of the method 800, the composite part includes a fiber reinforcement material, a matrix material, a carbon fiber material, a prepreg material, a thermoplastic material, a thermoset material or any other suitable material in any suitable combination in any suitable combination.

In another example of the method 800, the one or more replacement tows 302 include a fiber reinforcement tape, a fiber/polymer tape, a prepreg tape, a strip of a fiber reinforcement material, a strip of a fiber/polymer material, a strip of a prepreg material or any other suitable material in any suitable combination.

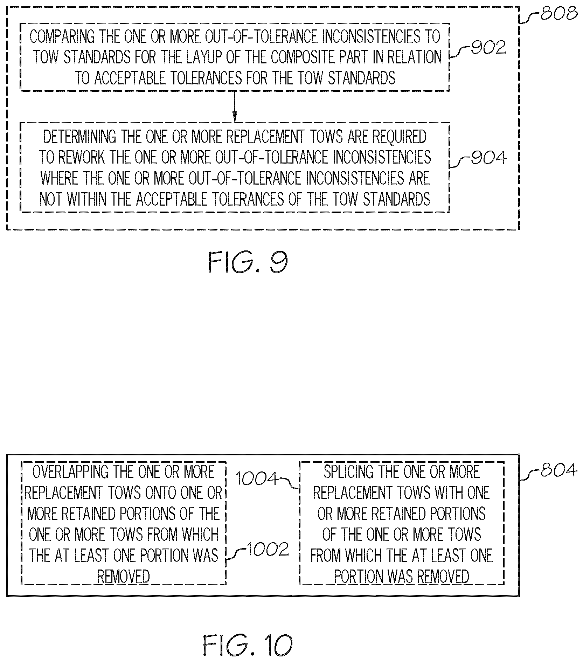

In yet another, the method 800 also includes determining 808 the one or more out-of-tolerance inconsistencies 202 require the rework. In a further example, the determining 808 the one or more out-of-tolerance inconsistencies 202 require the rework and the depositing 804 of the one or more replacement tows 302 are performed prior to the depositing 806 of the second plurality of tows 206 to form the second ply 204. In another further example of the method 800, the determining 808 includes comparing 902 (see Fig. 9) the one or more out-of-tolerance inconsistencies 202 to tow standards for the layup 200 of the composite part in relation to acceptable tolerances for the tow standards. At 904, it is determined that the one or more replacement tows 302 are required to rework the one or more out-of-tolerance inconsistencies 202 where the one or more out-of-tolerance inconsistencies 202 are not within the acceptable tolerances of the tow standards.

In still another example, the method 800 also includes removing 810 at least one portion of one or more tows 206 of the first plurality of tows 206 in the first ply 204 to prepare for rework of the one or more out-of-tolerance inconsistencies 202. The at least one portion of the one or more tows 206 being proximate to the one or more out-of-tolerance inconsistencies 202. In a further example, the one or more replacement tows 302 are deposited onto the substrate 1402 to replace the at least one portion of the one or more tows 206 removed from the first ply 204. In another further example, the removing 810 of the at least one portion of the one or more tows 206 is performed using a tow removal tool 1306. In yet another further example of the method 800, the depositing 804 of the one or more replacement tows 302 includes overlapping 1002 (see Fig. 10) the one or more replacement tows 302 onto one or more retained portions 304 of the one or more tows 206 from which the at least one portion was removed. In still another further example of the method 800, the depositing 804 of the one or more replacement tows 302 includes splicing 1004 the one or more replacement tows 302 with one or more retained portions 304 of the one or more tows 206 from which the at least one portion was removed.

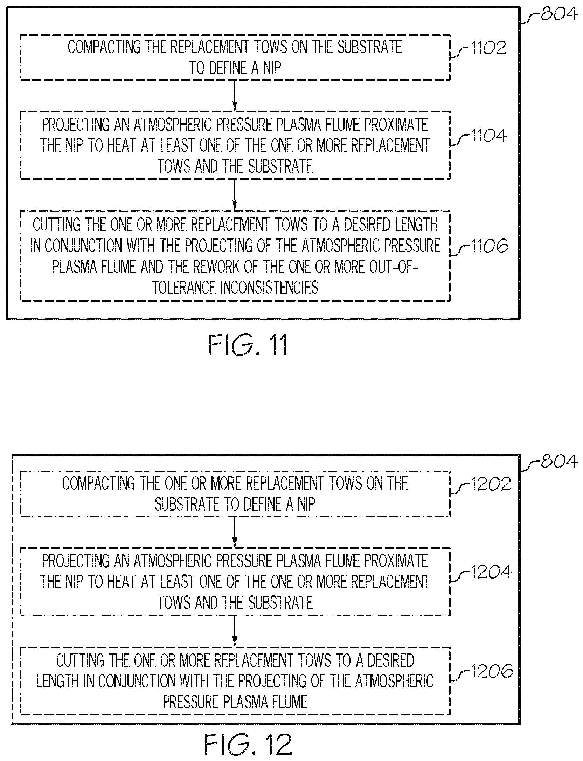

In still yet another example of the method 800, the depositing 804 of the one or more replacement tows 302 includes compacting 1102 (see Fig. 11) the one or more replacement tows 302 on the substrate 1402 to define a nip 1602. In a further example, the single-lane automated fiber placement device 1304 includes a compaction roller 1604. In this example, the compacting 1102 of the one or more replacement tows 302 is performed using the compaction roller 1604. The compaction roller 1604 and the substrate 1402 define the nip 1602.

In another further example of the method 800, the depositing 804 of the one or more replacement tows 302 also includes projecting 1104 an atmospheric pressure plasma flume 1608 proximate the nip 1602 to heat at least one of the one or more replacement tows 302 and the substrate 1402. In an even further example of the method 800, the depositing 804 of the one or more replacement tows 302 also includes cutting 1106 the one or more replacement tows 302 to a desired length in conjunction with the projecting 1104 of the atmospheric pressure plasma flume 1608 and the rework of the one or more out-of-tolerance inconsistencies 202.

In yet another example of the method 800, the one or more out-of-tolerance inconsistencies 202 in the first ply 204 of the layup 200 for the composite part are due to a segment 210 missing from one or more tows 206. In this example, the depositing 804 of the one or more replacement tows 302 includes compacting 1202 (see Fig. 12) the one or more replacement tows 302 on the substrate 1402 to define a nip 1602. At 1204, an atmospheric pressure plasma flume 1608 is projected proximate the nip 1602 to heat at least one of the one or more replacement tows 302 and the substrate 1402. At 1206, the one or more replacement tows 302 are cut to a desired length in conjunction with the projecting 1204 of the atmospheric pressure plasma flume 1608.

Referring generally to Figs. 2, 3, 13A-C, 14A, 14B, 15 and 16, by way of examples, the present disclosure is directed to a system for fabricating a layup 200 for a composite part. The present disclosure is directed to methods 100, 1700 for fabrication of a layup 200 for a composite part. Fig. 2 shows an example of multiple tows 206 of a ply 204 for the layup 200 and several examples of out-of-tolerance inconsistencies 202. Fig. 3 shows examples of replacement tows 302 for rework of the out-of-tolerance inconsistencies 202. Fig. 13A, 14A and 14B show several examples of multi-lane automated fiber placement devices 1302. Fig. 13B is a functional diagram of an example of a tow removal tool 1306. Fig. 13C is a functional diagram of an example of a single-lane automated fiber placement device 1304.

With reference again to Figs. 2, 3, 13A-C, 14A, 14B, 15 and 16, in one or more examples, a system for fabricating a layup 200 for a composite part includes a multi-lane automated fiber placement device 1302 and a single-lane automated fiber placement device 1304. The multi-lane automated fiber placement device 1302 configured to deposit a first plurality of tows 206 onto a substrate 1402 to form a first ply 204 overlaying the substrate 1402 in conjunction with fabrication of the layup 200 for the composite part. The single-lane automated fiber placement device 1304 configured to deposit one or more replacement tows 302 onto the substrate 1402 to rework one or more out-of-tolerance inconsistencies 202 in the first ply 204. The one or more out-of-tolerance inconsistencies 202 having been previously identified and designated for rework. After the rework of the one or more out-of-tolerance inconsistencies 202, the multi-lane automated fiber placement device 1302 is configured to deposit a second plurality of tows 206 onto the substrate 1402 to form a second ply 204 overlaying the first ply 204 in conjunction with fabrication of the layup 200 for the composite part.

In another example of the system, the plurality of tows 206 include a fiber reinforcement tape, a fiber/polymer tape, a prepreg tape, a strip of a fiber reinforcement material, a strip of a fiber/polymer material, a strip of a prepreg material or any other suitable material in any suitable combination.

In yet another example of the system, the substrate 1402 includes at least one of a layup tool and one or more preceding plies 204 overlaid on the layup tool.

In still another example of the system, the layup 200 includes a plurality of plies 204. The plurality of plies 204 includes the first ply 204 and the second ply 204. The first ply 204 includes one or more courses 208. Each course 208 includes multiple tows 206. The multiple tows 206 of each course 208 concurrently overlaid on the substrate 1402 by the multi-lane automated fiber placement device 1302.

In still yet another example of the system, the composite part includes a fiber reinforcement material, a matrix material, a carbon fiber material, a prepreg material, a thermoplastic material, a thermoset material or any other suitable material in any suitable combination.

In another example of the system, the one or more replacement tows 302 include a fiber reinforcement tape, a fiber/polymer tape, a prepreg tape, a strip of a fiber reinforcement material, a strip of a fiber/polymer material, a strip of a prepreg material or any other suitable material in any suitable combination.

In yet another example of the system, the multi-lane automated fiber placement device 1302 includes a plurality of tow layup machines 1404 configured to concurrently deposit tows 206 onto the substrate 1402 to form a course 208 of tows for the first ply 204. Each tow layup machine 1404 includes a layup tow material dispenser 1504, a layup feed mechanism 1506, a layup cutting mechanism 1508, a layup compaction roller 1510, a layup heat source 1512 and an imaging sensor 1502. The image sensor 1508 is configured to capture image data associated with the corresponding tow 206. The multi-lane automated fiber placement device 1302 also includes a computing device 1406 configured to analyze the image data for the first ply 204. In a further example, the plurality of tow layup machines 1404 include two tow layup machines 1404, four tow layup machines 1404, eight tow layup machines 1404, sixteen tow layup machines 1404 or any other suitable quantity of tow layup machines 1404. In another further example, the computing device 1406 is configured to identify the one or more out-of-tolerance inconsistencies 202 in the first ply 204 based on the image data for the first ply 204. In another further example, the computing device 1406 is configured to compare the image data for the one or more out-of-tolerance inconsistencies 202 in the first ply 204 to tow standards for the layup 200 of the composite part in relation to acceptable tolerances for the tow standards. In this example, the computing device 1406 is configured to determine the one or more replacement tows 302 are required to rework the one or more out-of-tolerance inconsistencies 202 in the first ply 204 where the one or more out-of-tolerance inconsistencies 202 are not within the acceptable tolerances of the tow standards.

In still another example, the system also includes a tow removal tool 1306 configured to remove at least one portion of one or more tows 206 of the first plurality of tows 206 in the first ply 204 to prepare for rework of the one or more out-of-tolerance inconsistencies 202. The at least one portion of the one or more tows 206 being proximate to the one or more out-of-tolerance inconsistencies 202. In a further example, the single-lane automated fiber placement device 1304 is configured to deposit the one or more replacement tows 302 onto the substrate 1402 to replace the at least one portion of the one or more tows 206 removed from the first ply 204. In another further example of the system, the tow removal tool 1306 includes a seam ripper tool. In yet another further example, the single-lane automated fiber placement device 1304 is configured to deposit the one or more replacement tows 302 onto the substrate 1402 to overlap the one or more replacement tows 302 onto one or more retained portions 304 of the one or more tows 206 from which the at least one portion was removed. In still another further example, the single-lane automated fiber placement device 1304 is configured to deposit the one or more replacement tows 302 onto the substrate 1402 to splice the one or more replacement tows 302 with one or more retained portions 304 of the one or more tows 206 from which the at least one portion was removed.

In still yet another example of the system, the single-lane automated fiber placement device 1304 includes a compaction roller 1604 configured to compact the one or more replacement tows 302 on the substrate 1402 to define a nip 1602. The compaction roller 1604 and the substrate 1402 define the nip 1602. In a further example, the single-lane automated fiber placement device 1304 also includes an atmospheric pressure plasma heat source 1606 configured to project an atmospheric pressure plasma flume 1608 proximate the nip 1602 to heat at least one of the one or more replacement tows 302 and the substrate 1402. In an even further example, the single-lane automated fiber placement device 1304 also includes a cutting mechanism 1610 configured to cut the one or more replacement tows 302 to a desired length in conjunction with operation of the atmospheric pressure plasma heat source 1606 and the rework of the one or more out-of-tolerance inconsistencies 202. In an even yet further example, the single-lane automated fiber placement device 1304 also includes a tow material dispenser 1612 and a feed mechanism 1614. The tow material dispenser 1612 configured to hold and dispense bulk tow material. The feed mechanism 1614 configured to advance the bulk tow material from the tow material dispenser 1612 to the compaction roller 1604 via the cutting mechanism 1610.

In another example of the system, the one or more out-of-tolerance inconsistencies 202 in the first ply 204 of the layup 200 for the composite part are due to a segment 210 missing from one or more tows 206. In this example, the single-lane automated fiber placement device 1304 includes a compaction roller 1604, an atmospheric pressure plasma heat source 1606 and a cutting mechanism 1610. The compaction roller 1604 configured to compact the one or more replacement tows 302 on the substrate 1402 to define a nip 1602. The atmospheric pressure plasma heat source 1606 configured to project an atmospheric pressure plasma flume 1608 proximate the nip 1602 to heat at least one of the one or more replacement tows 302 and the substrate 1402. The cutting mechanism 1610 configured to cut the one or more replacement tows 302 to a desired length in conjunction with projection of the atmospheric pressure plasma flume 1608.

In yet another example of the system, the single-lane automated fiber placement device 1304 includes a tow material dispenser 1612, a feed mechanism 1614, a cutting mechanism 1610, a compaction roller 1604 and an atmospheric pressure plasma heat source 1606.

Examples of methods 100, 800, 1700, 1800, 1900 and systems for fabrication of a layup 200 of composite material may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of composite products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1, 4-12 and 17-19, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 1, 4-12 and 17-19 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

In Figs. 2, 3, 13A-C, 14A, 14C, 15 and 16, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 2, 3, 13A-C, 14A, 14C, 15 and 16, referred to above, need be included in every example and not all elements, features and/or components described herein are necessarily depicted in each illustrative example. Accordingly, some of the elements, features and/or components described and illustrated in Figs. 2, 3, 13A-C, 14A, 14C, 15 and 16 may be combined in various ways without the need to include other features described and illustrated in Figs. 2, 3, 13A-C, 14A, 14C, 15 and 16, other drawing figures and/or the accompanying disclosure, even though such combination or combinations are not explicitly illustrated herein. Unless otherwise explicitly stated, the schematic illustrations of the examples depicted in Figs. 2, 3, 13A-C, 14A, 14C, 15 and 16, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 2, 3, 13A-C, 14A, 14C, 15 and 16 and such elements, features and/or components may not be discussed in detail herein with reference to each of Figs. 2, 3, 13A-C, 14A, 14C, 15 and 16. Similarly, all elements, features and/or components may not be labeled in each of Figs. 2, 3, 13A-C, 14A, 14C, 15 and 16, but reference numerals associated therewith may be utilized herein for consistency.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

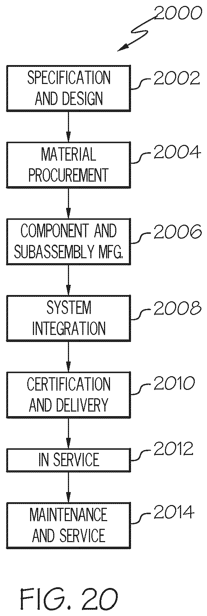

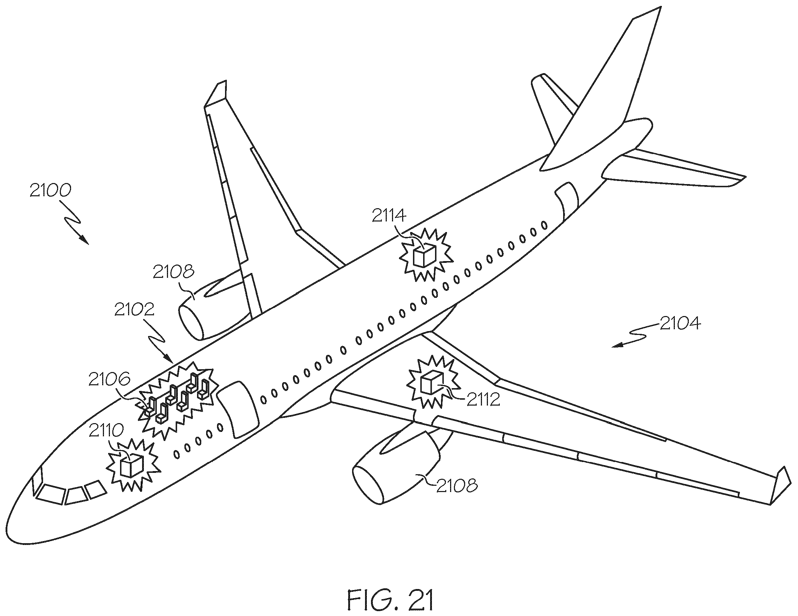

Examples of the subject matter disclosed herein may be described in the context of aircraft manufacturing and service method 2000 as shown in Fig. 20 and aircraft 2100 as shown in Fig. 21. In one or more examples, the disclosed methods and systems for associating test data for a part under test with an end item coordinate system may be used in aircraft manufacturing. During pre-production, the service method 2000 may include specification and design (block 2002) of aircraft 2100 and material procurement (block 2004). During production, component and subassembly manufacturing (block 2006) and system integration (block 2008) of aircraft 2100 may take place. Thereafter, aircraft 2100 may go through certification and delivery (block 2010) to be placed in service (block 2012). While in service, aircraft 2100 may be scheduled for routine maintenance and service (block 2014). Routine maintenance and service may include modification, reconfiguration, refurbishment, etc. of one or more systems of aircraft 2100.

Each of the processes of the service method 2000 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 21, aircraft 2100 produced by the service method 2000 may include airframe 2102 with a plurality of high-level systems 2104 and interior 2106. Examples of high-level systems 2104 include one or more of propulsion system 2108, electrical system 2110, hydraulic system 2112 and environmental system 2114. Any number of other systems may be included. Although an aerospace example is shown, the principles disclosed herein may be applied to other industries, such as the automotive industry. Accordingly, in addition to aircraft 2100, the principles disclosed herein may apply to other vehicles, e.g., land vehicles, marine vehicles, space vehicles, etc.

The disclosed systems and methods for associating test data for a part under test with an end item coordinate system may be employed during any one or more of the stages of the manufacturing and service method 2000. For example, components or subassemblies corresponding to component and subassembly manufacturing (block 2006) may be fabricated or manufactured in a manner similar to components or subassemblies produced while aircraft 2100 is in service (block 2012). Also, one or more examples of the system(s), method(s), or combination thereof may be utilized during production stages (block 2006 and block 2008), for example, by substantially expediting assembly of or reducing the cost of aircraft 2100. Similarly, one or more examples of the system or method realizations, or a combination thereof, may be utilized, for example and without limitation, while aircraft 2100 is in service (block 2012) and/or during maintenance and service (block 2014).

One skilled in the relevant art will recognize that the examples described herein may be practiced without one or more of the specific features or advantages of a particular example. In other instances, additional features and advantages may be recognized in certain examples that may not be present in all examples.

## Claims

1. A method (100) for fabrication of a layup (200) for a composite part, the method comprising:
depositing (1702) at least one course (208) of multiple tows (206) for a current ply (204) of the layup (200) onto a substrate (1402) using a multi-lane automated fiber placement device (1302);
identifying (102) an out-of-tolerance inconsistency (202) in the current ply (204) of the layup (200) for the composite part;
after the identifying (102) the out-of-tolerance inconsistency (202), removing (1704) the multi-lane automated fiber placement device (1302) from the layup (200);
providing (1706) a single-lane automated fiber placement device (1304) to the layup (200);
depositing (104) a replacement tow (302) onto the substrate (1402) to rework the out-of-tolerance inconsistency (202) in the current ply (204) for the layup (200) of the composite part using a single-lane automated fiber placement device (1304);
removing (1710) the single-lane automated fiber placement device (1304) from the layup (200);
providing (1712) the multi-lane automated fiber placement device (1302) to the layup (200); and
resuming (1714) the depositing of courses (208) of multiple tows (206) for the current ply (204) and/or subsequent plies (204) of the layup (200).

2. The method of claim 1, wherein the identifying (102) of the out-of-tolerance inconsistency (202) is performed using at least one imaging sensor (1502).

3. The method of claim 1 or 2, further comprising:
determining (106) the out-of-tolerance inconsistency (202) requires the rework.

4. The method of claim 3, further comprising:
comparing (402) the out-of-tolerance inconsistency (202) to tow standards for the layup (200) of the composite part in relation to acceptable tolerances for the tow standards; and
determining (404) the replacement tow (302) is required to rework the out-of-tolerance inconsistency (202) where the out-of-tolerance inconsistency (202) is not within the acceptable tolerances of the tow standards.

5. The method of any one of claims 1-4, further comprising:
removing (108) at least one portion of one or more tows (206) of the plurality of tows (206) in the current ply (204) to prepare for the rework of the out-of-tolerance inconsistency (202), the at least one portion of the one or more tows (206) being proximate to the out-of-tolerance inconsistency (202).

6. The method of claim 5, wherein:
the replacement tow (302) is deposited onto the substrate (1402) to replace the at least one portion of the one or more tows (206) removed from the current ply (204).

7. The method of claim 5 or 6, wherein the depositing (104) of the replacement tow (302) comprises:
overlapping (502) the replacement tow (302) onto one or more retained portions (304) of the one or more tows (206) from which the at least one portion was removed.

8. The method of any one of claims 5-7, wherein the depositing (104) of the replacement tow (302) comprises:
splicing (504) the replacement tow (302) with one or more retained portions (304) of the one or more tows (206) from which the at least one portion was removed.

9. The method of any one of claims 1-8, the depositing (104) of the replacement tow (302) comprising:
compacting (602) the replacement tow (302) on the substrate (1402) to define a nip (1602).

10. The method of claim 9, the depositing (104) of the replacement tow (302) further comprising:
projecting (604) an atmospheric pressure plasma flume (1608) proximate the nip (1602) to heat at least one of the replacement tow (302) and the substrate (1402).

11. The method of claim 10, wherein the projecting (604) of the atmospheric pressure plasma flume (1608) comprises projecting the atmospheric pressure plasma flume (1608) at an emanation angle ranging from at least one of about 0 degrees to about 20 degrees, about 0 degrees to about 10 degrees and about 0 degrees to about 5 degrees.

12. The method of claim 10 or 11, wherein the projecting (604) of the atmospheric pressure plasma flume (1608) comprises projecting the atmospheric pressure plasma flume (1608) at a pressure ranging from about 103.42 kPa (15 psi) to about 344.74 kPa (50 psi).

13. The method of any one of claims 10-12, wherein the atmospheric pressure plasma flume (1608):
has a width ranging from at least one of about 2.54 mm (0.10 inches) to about 10.16 mm (0.40 inches), about 3.81 mm (0.15 inches) to about 8.89 mm (0.35 inches) and about 5.08 mm (0.20 inches) to about 7.62 mm (0.30 inches); and/or
has a length ranging from at least one of about 6.35 mm (0.25 inches) to about 38.1 mm (1.5 inches), about 12.7 mm (0.5 inches) to about 25.4 mm (1.0 inches) and about 17.78 mm (0.70 inches) to about 20.32 mm (0.80 inches); and/or
is about 12.7 mm (0.5 inches) to about 20.32 mm (0.8 inches) from the nip (1602).

14. The method of any one of claims 1-13, wherein the out-of-tolerance inconsistency (202) in the layup (200) of the composite part is due to a segment (210) missing from one or more tows (206), the depositing (104) of the replacement tow (302) comprising:
compacting (702) the replacement tow (302) on the substrate (1402) to define a nip (1602);
projecting (704) an atmospheric pressure plasma flume (1608) proximate the nip (1602) to heat at least one of the replacement tow (302) and the substrate (1402); and
cutting (706) the replacement tow (302) to a desired length in conjunction with the projecting (704) of the atmospheric pressure plasma flume (1608).

15. A system for fabricating a layup (200) for a composite part, the system comprising:
a multi-lane automated fiber placement device (1302) configured to deposit a first plurality of tows (206) onto a substrate (1402) to form a first ply (204) overlaying the substrate (1402) in conjunction with fabrication of the layup (200) for the composite part; and
a single-lane automated fiber placement device (1304) configured to deposit one or more replacement tows (302) onto the substrate (1402) to rework one or more out-of-tolerance inconsistencies (202) in the first ply (204), the one or more out-of-tolerance inconsistencies (202) having been previously identified and designated for rework;
wherein, after the rework of the one or more out-of-tolerance inconsistencies (202), the multi-lane automated fiber placement device (1302) is configured to deposit a second plurality of tows (206) onto the substrate (1402) to form a second ply (204) overlaying the first ply (204) in conjunction with fabrication of the layup (200) for the composite part.

## Patentansprüche

1. Verfahren (100) für eine Herstellung eines Lagenaufbaus (200) für ein Verbundteil, das Verfahren umfassend:
Aufbringen (1702) mindestens einer Schicht (208) aus mehreren Strängen (206) für eine aktuelle Lage (204) des Lagenaufbaus (200) auf ein Substrat (1402) unter Verwendung einer mehrspurigen automatisierten Faserplatzierungsvorrichtung (1302);
Identifizieren (102) einer außerhalb der Toleranz liegenden Inkonsistenz (202) in der aktuellen Lage (204) des Lagenaufbaus (200) für das Verbundteil;
nach dem Identifizieren (102) der außerhalb der Toleranz liegenden Inkonsistenz (202), Entfernen (1704) der mehrspurigen automatisierten Faserplatzierungsvorrichtung (1302) von dem Lagenaufbau (200);
Bereitstellen (1706) einer einspurigen automatisierten Faserplatzierungsvorrichtung (1304) für den Lagenaufbau (200);
Aufbringen (104) eines Ersatzstrangs (302) auf das Substrat (1402), um die außerhalb der Toleranz liegende Inkonsistenz (202) in der aktuellen Lage (204) für den Lagenaufbau (200) des Verbundteils unter Verwendung einer einspurigen automatisierten Faserplatzierungsvorrichtung (1304) nachzuarbeiten;
Entfernen (1710) der einspurigen automatisierten Faserplatzierungsvorrichtung (1304) von dem Lagenaufbau (200);
Bereitstellen (1712) der mehrspurigen automatisierten Faserplatzierungsvorrichtung (1302) für den Lagenaufbau (200); und
Wiederaufnehmen (1714) des Aufbringens von Schichten (208) aus mehreren Strängen (206) für die aktuelle Lage (204) und/oder nachfolgende Lagen (204) des Lagenaufbaus (200).

2. Verfahren nach Anspruch 1, wobei das Identifizieren (102) der außerhalb der Toleranz liegenden Inkonsistenz (202) unter Verwendung von mindestens einem Bildgebungssensor (1502) durchgeführt wird.

3. Verfahren nach Anspruch 1 oder 2, ferner umfassend:
Bestimmen (106), dass die außerhalb der Toleranz liegende Inkonsistenz (202) die Nacharbeit erfordert.

4. Verfahren nach Anspruch 3, ferner umfassend:
Vergleichen (402) der außerhalb der Toleranz liegenden Inkonsistenz (202) mit Strangnormen für den Lagenaufbau (200) des Verbundteils in Bezug auf akzeptable Toleranzen für die Strangnormen; und
Bestimmen (404), dass der Ersatzstrang (302) erforderlich ist, um die außerhalb der Toleranz liegende Inkonsistenz (202) nachzuarbeiten, wobei die außerhalb der Toleranz liegende Inkonsistenz (202) nicht innerhalb der akzeptablen Toleranzen der Strangnormen liegt.

5. Verfahren nach einem der Ansprüche 1 bis 4, ferner umfassend:
Entfernen (108) mindestens eines Abschnitts eines oder mehrerer Stränge (206) der Vielzahl von Strängen (206) in der aktuellen Lage (204), um für die Nacharbeit der außerhalb der Toleranz liegenden Inkonsistenz (202) vorzubereiten, wobei der mindestens eine Abschnitt des einen oder der mehreren Stränge (206) in der Nähe der außerhalb der Toleranz liegenden Inkonsistenz (202) liegt.

6. Verfahren nach Anspruch 5, wobei:
der Ersatzstrang (302) auf das Substrat (1402) aufgebracht wird, um den mindestens einen Abschnitt des einen oder der mehreren Stränge (206) zu ersetzen, die von der aktuellen Lage (204) entfernt werden.

7. Verfahren nach Anspruch 5 oder 6, wobei das Aufbringen (104) des Ersatzstrangs (302) umfasst:
Überlappen (502) des Ersatzstrangs (302) auf einen oder mehrere beibehaltene Abschnitte (304) des einen oder der mehreren Stränge (206), von denen der mindestens eine Abschnitt entfernt wurde.

8. Verfahren nach einem der Ansprüche 5 bis 7, wobei das Aufbringen (104) des Ersatzstrangs (302) umfasst:
Spleißen (504) des Ersatzstrangs (302) mit einem oder mehreren beibehaltenen Abschnitten (304) des einen oder der mehreren Stränge (206), von denen der mindestens eine Abschnitt entfernt wurde.

9. Verfahren nach einem der Ansprüche 1 bis 8, das Aufbringen (104) des Ersatzstrangs (302) umfassend:
Verdichten (602) des Ersatzstrangs (302) auf dem Substrat (1402), um einen Walzenspalt (1602) zu definieren.

10. Verfahren nach Anspruch 9, das Aufbringen (104) des Ersatzstrangs (302) ferner umfassend:
Projizieren (604) einer Normaldruckplasmafahne (1608) in der Nähe des Walzenspalts (1602), um mindestens eines von dem Ersatzstrang (302) und dem Substrat (1402) zu erwärmen.

11. Verfahren nach Anspruch 10, wobei ein Projizieren (604) der Normaldruckplasmafahne (1608) das Projizieren der Normaldruckplasmafahne (1608) in einem Ausstrahlungswinkel im Bereich von mindestens einem von etwa 0 Grad bis etwa 20 Grad, etwa 0 Grad bis etwa 10 Grad und etwa 0 Grad bis etwa 5 Grad umfasst.

12. Verfahren nach Anspruch 10 oder 11, wobei das Projizieren (604) der Normaldruckplasmafahne (1608) das Projizieren der Normaldruckplasmafahne (1608) bei einem Druck im Bereich von etwa 103,42 kPa (15 psi) bis etwa 344,74 kPa (50 psi) umfasst.

13. Verfahren nach einem der Ansprüche 10 bis 12, wobei die Normaldruckplasmafahne (1608):
eine Breite im Bereich von mindestens einem von etwa 2,54 mm (0,10 Zoll) bis etwa 10,16 mm (0,40 Zoll), etwa 3,81 mm (0,15 Zoll) bis etwa 8,89 mm (0,35 Zoll) und etwa 5,08 mm (0,20 Zoll) bis etwa 7,62 mm (0,30 Zoll) aufweist; und/oder
eine Länge im Bereich von mindestens einem von etwa 6,35 mm (0,25 Zoll) bis etwa 38,1 mm (1,5 Zoll), etwa 12,7 mm (0,5 Zoll) bis etwa 25,4 mm (1,0 Zoll) und etwa 17,78 mm (0,70 Zoll) bis etwa 20,32 mm (0,80 Zoll) aufweist; und/oder
etwa 12,7 mm (0,5 Zoll) bis etwa 20,32 mm (0,8 Zoll) von dem Walzenspalt (1602) ist.

14. Verfahren nach einem der Ansprüche 1 bis 13, wobei die außerhalb der Toleranz liegende Inkonsistenz (202) in dem Lagenaufbau (200) des Verbundteils darauf zurückzuführen ist, dass ein Segment (210) von einem oder mehreren Strängen (206) fehlt, das Aufbringen (104) des Ersatzstrangs (302) umfassend:
Verdichten (702) des Ersatzstrangs (302) auf dem Substrat (1402), um einen Walzenspalt (1602) zu definieren;
Projizieren (704) einer Normaldruckplasmafahne (1608) in der Nähe des Walzenspalts (1602), um mindestens eines von dem Ersatzstrang (302) und dem Substrat (1402) zu erwärmen; und
Schneiden (706) des Ersatzstrangs (302) auf eine gewünschte Länge in Verbindung mit dem Projizieren (704) der Normaldruckplasmafahne (1608).

15. System für die Herstellung eines Lagenaufbaus (200) für ein Verbundteil, das System umfassend:
eine mehrspurige automatisierte Faserplatzierungsvorrichtung (1302), die konfiguriert ist, um eine erste Vielzahl von Strängen (206) auf ein Substrat (1402) aufzubringen, um eine erste Lage (204) auszubilden, die das Substrat (1402) überlagert, in Verbindung mit der Herstellung des Lagenaufbaus (200) für das Verbundteil; und
eine einspurige automatisierte Faserplatzierungsvorrichtung (1304), die konfiguriert ist, um ein oder mehrere Ersatzstränge (302) auf das Substrat (1402) aufzubringen, um eine oder mehrere außerhalb der Toleranz liegende Inkonsistenzen (202) in der ersten Lage (204) nachzuarbeiten, wobei die eine oder die mehreren außerhalb der Toleranz liegenden Inkonsistenzen (202) zuvor identifiziert und für eine Nacharbeit vorgesehen wurden;
wobei nach der Nacharbeit der einen oder der mehreren außerhalb der Toleranz liegenden Inkonsistenzen (202) die mehrspurige automatisierte Faserplatzierungsvorrichtung (1302) konfiguriert ist, um eine zweite Vielzahl von Strängen (206) auf das Substrat (1402) aufzubringen, um eine zweite Lage (204) auszubilden, die die erste Lage (204) überlagert, in Verbindung mit der Herstellung des Lagenaufbaus (200) für das Verbundteil.

## Revendications

1. Procédé (100) de fabrication d'un drapage (200) pour une pièce composite, le procédé comprenant :
le dépôt (1702) d'au moins une rangée (208) de plusieurs câbles (206) pour un pli (204) actuel du drapage (200) sur un substrat (1402) à l'aide d'un dispositif de placement de fibres automatisé à plusieurs voies (1302) ;
l'identification (102) d'une incohérence hors tolérance (202) dans le pli (204) actuel du drapage (200) pour la pièce composite ;
après l'identification (102) de l'incohérence hors tolérance (202), le retrait (1704) du dispositif de placement de fibres automatisé à plusieurs voies (1302) à partir du drapage (200) ;
la fourniture (1706) d'un dispositif de placement de fibres automatisé à voie unique (1304) au drapage (200) ;
le dépôt (104) d'un câble de remplacement (302) sur le substrat (1402) pour retravailler l'incohérence hors tolérance (202) dans le pli (204) actuel pour le drapage (200) de la pièce composite à l'aide d'un dispositif de placement de fibres automatisé à voie unique (1304) ;
le retrait (1710) du dispositif de placement de fibres automatisé à voie unique (1304) à partir du drapage (200) ;
la fourniture (1712) du dispositif de placement de fibres automatisé à plusieurs voies (1302) au drapage (200) ; et
la reprise (1714) du dépôt de rangée (208) de plusieurs câbles (206) pour le pli (204) actuel et/ou des plis (204) ultérieurs du drapage (200).

2. Procédé selon la revendication 1, dans lequel l'identification (102) de l'incohérence hors tolérance (202) est réalisée à l'aide d'au moins un capteur d'imagerie (1502).

3. Procédé selon la revendication 1 ou 2, comprenant en outre :
la détermination (106) du fait que l'incohérence hors tolérance (202) nécessite le retravail.

4. Procédé selon la revendication 3, comprenant en outre :
la comparaison (402) de l'incohérence hors tolérance (202) à des critères de câble pour le drapage (200) de la pièce composite par rapport à des tolérances acceptables pour les critères de câble ; et
la détermination (404) du fait que le câble de remplacement (302) est nécessaire pour retravailler l'incohérence hors tolérance (202) lorsque l'incohérence hors tolérance (202) ne se trouve pas à l'intérieur des tolérances acceptables des critères de câble.

5. Procédé selon l'une quelconque des revendications 1 à 4, comprenant en outre :
le retrait (108) d'au moins une partie d'un ou plusieurs câbles (206) de la pluralité de câbles (206) dans le pli (204) actuel afin de préparer le retravail de l'incohérence hors tolérance (202), l'au moins une partie du ou des câbles (206) étant à proximité de l'incohérence hors tolérance (202).

6. Procédé selon la revendication 5, dans lequel :
le câble de remplacement (302) est déposé sur le substrat (1402) pour remplacer l'au moins une partie du ou des câbles (206) retirés du pli (204) actuel.

7. Procédé selon la revendication 5 ou 6, dans lequel le dépôt (104) du câble de remplacement (302) comprend :
le recouvrement (502) du câble de remplacement (302) sur une ou plusieurs parties retenues (304) du ou des câbles (206) à partir desquels l'au moins une partie a été retirée.

8. Procédé selon l'une quelconque des revendications 5 à 7, dans lequel le dépôt (104) du câble de remplacement (302) comprend :
l'épissage (504) du câble de remplacement (302) avec une ou plusieurs parties retenues (304) du ou des câbles (206) à partir desquels l'au moins une partie a été retirée.

9. Procédé selon l'une quelconque des revendications 1 à 8, le dépôt (104) du câble de remplacement (302) comprenant :
le compactage (602) du câble de remplacement (302) sur le substrat (1402) afin de définir un espacement (1602).

10. Procédé selon la revendication 9, le dépôt (104) du câble de remplacement (302) comprenant en outre :
la projection (604) d'un canal à plasma à pression atmosphérique (1608) à proximité de l'espacement (1602) afin de chauffer au moins l'un du câble de remplacement (302) et du substrat (1402).

11. Procédé selon la revendication 10, dans lequel la projection (604) du canal à plasma à pression atmosphérique (1608) comprend la projection du canal à plasma à pression atmosphérique (1608) selon un angle d'émission allant d'au moins l'un parmi environ 0 degré à environ 20 degrés, environ 0 degré à environ 10 degrés et environ 0 degré à environ 5 degrés.

12. Procédé selon la revendication 10 ou 11, dans lequel la projection (604) du canal à plasma à pression atmosphérique (1608) comprend la projection du canal à plasma à pression atmosphérique (1608) à une pression allant d'environ 103,42 kPa (15 psi) à environ 344,74 kPa (50 psi).

13. Procédé selon l'une quelconque des revendications 10 à 12, dans lequel le canal à plasma à pression atmosphérique (1608) :
a une largeur allant d'au moins l'un parmi environ 2,54 mm (0,10 pouce) à environ 10,16 mm (0,40 pouce), environ 3,81 mm (0,15 pouce) à environ 8,89 mm (0,35 pouce) et environ 5,08 mm (0,20 pouce) à environ 7,62 mm (0,30 pouce) ; et/ou
a une longueur allant d'au moins l'un parmi environ 6,35 mm (0,25 pouce) à environ 38,1 mm (1,5 pouce), environ 12,7 mm (0,5 pouce) à environ 25,4 mm (1,0 pouce) et environ 17,78 mm (0,70 pouce) à environ 20,32 mm (0,80 pouce) ; et/ou
est à environ 12,7 mm (0,5 pouce) à environ 20,32 mm (0,8 pouce) de l'espacement (1602).

14. Procédé selon l'une quelconque des revendications 1 à 13, dans lequel l'incohérence hors tolérance (202) dans le drapage (200) de la pièce composite est due à un segment (210) manquant dans un ou plusieurs câbles (206), le dépôt (104) du câble de remplacement (302) comprenant :
le compactage (702) du câble de remplacement (302) sur le substrat (1402) afin de définir un espacement (1602) ;
la projection (704) d'un canal à plasma à pression atmosphérique (1608) à proximité de l'espacement (1602) afin de chauffer au moins l'un du câble de remplacement (302) et du substrat (1402) ; et
la coupe (706) du câble de remplacement (302) à une longueur souhaitée en conjonction avec la projection (704) du canal à plasma à pression atmosphérique (1608).

15. Système de fabrication d'un drapage (200) pour une pièce composite, le système comprenant :
un dispositif de placement de fibres automatisé à plusieurs voies (1302) conçu pour déposer une première pluralité de câbles (206) sur un substrat (1402) afin de former un premier pli (204) recouvrant le substrat (1402) en conjonction avec la fabrication du drapage (200) pour la pièce composite ; et
un dispositif de placement de fibres automatisé à voie unique (1304) conçu pour déposer un ou plusieurs câbles de remplacement (302) sur le substrat (1402) afin de retravailler une ou plusieurs incohérences hors tolérance (202) dans le premier pli (204), la ou les incohérences hors tolérance (202) ayant été précédemment identifiées et désignées pour être retravaillées ;
dans lequel, après le retravail de la ou des incohérences hors tolérances (202), le dispositif de placement de fibres automatisé à plusieurs voies (1302) est conçu pour déposer une seconde pluralité de câbles (206) sur le substrat (1402) afin de former un second pli (204) recouvrant le premier pli (204) en conjonction avec la fabrication du drapage (200) pour la pièce composite.
